# EUROPÄISCHE PATENTSCHRIFT

(11) **EP 2 209 057 B1**
(45) Veröffentlichungstag und Bekanntmachung des Hinweises auf die Patenterteilung: **13.07.2011**
(21) Anmeldenummer: 09013834.8
(22) Anmeldetag: 04.11.2009
(51) Int. Cl.: G05D 16/20

(54) **Servodruckregler eines Gasregelgeräts**
Servo pressure regulator for a gas regulating device
Servorégulateur de pression d'un appareil de réglage du gaz

(30) Priorität: 16.12.2008 DE 102008062100
(43) Veröffentlichungstag der Anmeldung: 21.07.2010
(73) Patentinhaber: Honeywell Technologies Sarl, 1180 Rolle (CH)
(72) Erfinder: Munsterhuis, Wim, 7751 GP Dalen (NL); Van Prooijen, Frank, 7827 TK Emmen (NL); Baarda, Gerrit Jan, 7827 RE Emmen (NL)
(74) Vertreter: Sturm, Christoph

(56) Entgegenhaltungen:
- EP-A1- 0 740 242
- DE-A1- 10 220 155
- DE-A1- 10 251 816

## Beschreibung

Die Erfindung betrifft einen Servodruckregler eines Gasregelgeräts nach dem Oberbegriff des Anspruchs 1.

Aus der EP 0 740 242 B1 ist ein Servodruckregler für ein Gasregelgerät bekannt, welches eine Regelmembran umfasst, die zwei Druckkammern des Servodruckreglers voneinander begrenzt. Mit der Regelmembran des Servodruckreglers wirkt mindestens ein Federelement zusammen. Der Regelmembran des Servodruckreglers ist ein Ventilkörper eines Servoventils zugeordnet, der mit einem Ventilsitz des Servoventils zusammenwirkt, wobei abhängig von der an der Regelmembran anliegenden Druckdifferenz der Ventilkörper des Servoventils entweder bei geöffnetem Servoventil vom Ventilsitz desselben abgehoben oder bei geschlossenem Servoventil gegen den Ventilsitz desselben gedrückt ist.

Nach der EP 0 740 242 B1 umfasst der Servodruckregler einen Aktuator, der über eine Ventilstange auf die Regelmembran einwirkt, wobei der Aktuator eine Spule und demnach als elektromagnetischer Aktuator ausgebildet ist. Solche elektromagnetischen Aktuatoren verfügen über eine Vielzahl von Nachteilen. So sind dieselben durch Reibeffekte bzw. Hystereseeffekte gekennzeichnet. Weiterhin muss kontinuierlich eine Versorgungsspannung bereitgestellt werden, um einen elektromagnetischen Aktuator in einer definierten Position zu halten. Darüberhinaus ist die vom elektromagnetischen Aktuator bereitgestellte Kraft variabel und abhängig von einem Luftspalt im Aktuator. Aufgrund der obigen Nachteile von elektromagnetischen Aktuatoren ist die Funktionalität von Servodruckreglern mit elektromagnetischen Aktuatoren beschränkt.

Die DE 102 20 155 A1 offenbart einen Gasdruckregler mit eine Membran, auf die eine Kurvenscheibe eines Aktuators einwirkt.

Der Erfindung liegt die Aufgabe zu Grunde, einen neuartigen Servodruckregler eines Gasregelgeräts zu schaffen. Diese Aufgabe wird durch einen Servodruckregler eines Gasregelgeräts mit den Merkmalen des Anspruchs 1 gelöst.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte Darstellung eines Ser- vodruckreglers eines Gasregetgeräts;
- Fig. 2:: eine schematisierte Darstellung eines erfindungsgemäßen Ser- vodruckreglers eines Gasregelgeräts;
- Fig. 3:: eine schematisierte Darstellung eines Ser- vodruckreglers eines Gasregelgeräts;
- Fig. 4:: eine schematisierte Darstellung eines weiteren erfindungsgemäßen Ser- vodruckreglers eines Gasregelgeräts;
- Fig. 5:: eine schematisierte Darstellung eines Ser- vodruckreglers eines Gasregelgeräts;
- Fig. 6:: eine schematisierte Darstellung eines Ser- vodruckreglers eines Gasregelgeräts.

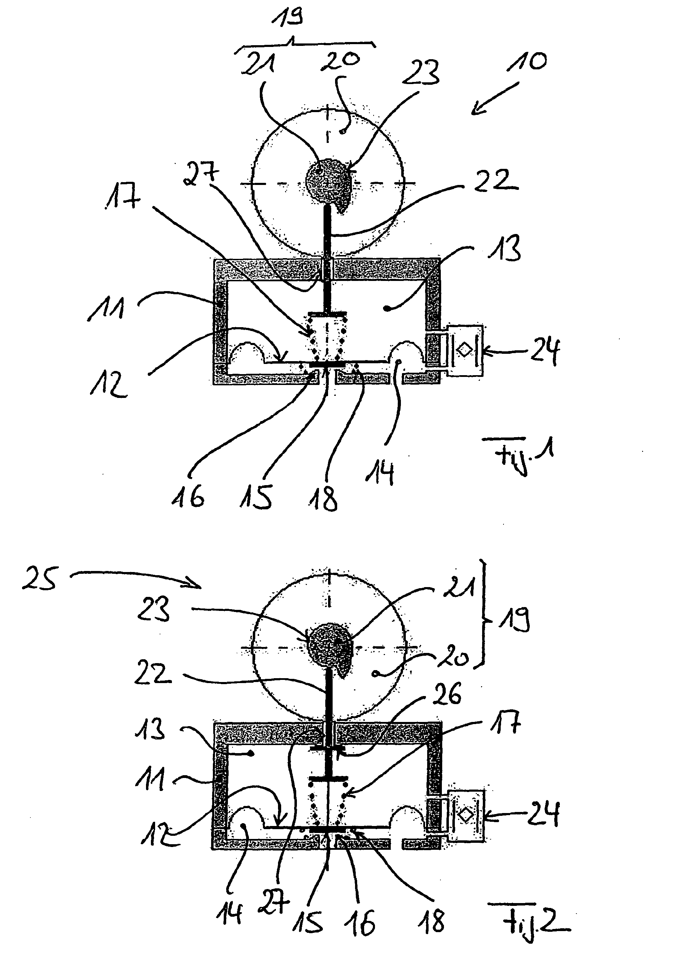

Fig. 1 zeigt einen Servodruckregler 10 eines Gasregelgeräts. Der Servodruckregler 10 gemäß Fig. 1 umfasst ein Gehäuse 11, in dem eine Regelmembran 12 positioniert ist, wobei die Regelmembran 12 zwei Druckkammern 13 und 14 des Servodruckreglers 10 voneinander abgrenzt.

Der Regelmembran 12 ist ein Ventilkörper 15 eines Servoventils zugeordnet, wobei der Ventilkörper 15 mit einem Ventilsitz 16 des Servoventils zusammenwirkt. Dann, wenn das Servoventil geschlossen ist, ist der Ventilkörper 15 gegen den Ventilsitz 16 gedrückt. Dann, wenn das Servoventil geöffnet ist, ist der Ventilkörper 15 vom Ventilsitz 16 abgehoben.

Gemäß Fig. 1 wirken mit der Regelmembran 12 zwei Federelemente zusammen. Ein erstes Federelement 17 drückt von einer ersten Seite gegen die Regelmembran 12, nämlich derart, dass die vom ersten Federelement 17 bereitgestellte Federkraft den Ventilkörper 15 gegen den Ventilsitz 16 des Servoventils drückt.

Ein zweites Federelement 18, welches als Offsetfeder ausgebildet ist, drückt von einer zweiten Seite gegen die Regelmembran 12, nämlich derart, dass die vom zweiten Federelement 18 bereitgestellte Federkraft gegen die vom ersten Federelement 17 bereitgestellte Federkraft wirkt. Das an der Regelmembran 12 anliegende Verhältnis aus Drücken innerhalb der Druckkammern 13, 14 sowie Federkräften der Federelemente 17, 18 bewirkt letztendlich, ob das Servoventil des Servodruckreglers 10 geöffnet oder geschlossen ist.

Der Servodruckregler 10 der Fig. 1 verfügt über einen Aktuator 19, der eine von einem Motor 20 drehend antreibbare Kurvenscheibe 21 umfasst. Die Kurvenscheibe 21 wirkt über eine Ventilstange 22 auf die Regelmembran 12, nämlich mittelbar über das erste Federelement 17. Die Kurvenscheibe 21 verfügt über eine Außenkontur 23, die mit der Ventilstange 22 zusammenwirkt und abhängig von deren relativer Drehlage die Ventilstange 22 mehr oder weniger stark gegen das erste Federelement 17 drückt. In Drehrichtung bzw. Umfangsrichtung der Kurvenscheibe 21 gesehen verändert sich demnach der Außendurchmesser der Außenkontur 23 der Kurvenscheibe 21.

Bei Motor 20 des Aktuators 19 handelt es sich vorzugsweise um einen Schrittmotor. Ober den Schrittmotor kann dann die Kurvenscheibe 21 in definierte Drehpositionen und damit Relativlagen zur Ventilstange 21 verdreht werden, wobei in jeder definierten Relativlage die Kurvenscheibe 21, nämlich die Außenkontur 23 derselben, einen definierten Außendurchmesser aufweist. Je größer dieser Außendurchmesser ist, desto stärker drückt die Ventilstange 22 gegen das erste Federelement 17 und umso höher ist die Federkraft, mit der das erste Federelement 17 gegen die Regelmembran 12 zum Schließen des Servoventils drückt.

Gemäß Fig. 1 sind die beiden Druckkammern 13 und 14 des Servodruckreglers 10 über einen Durchflusssensor 24 miteinander verbunden.

Ein erster Messpunkt des Durchflusssensors 24 greift demnach an der Druckkammer 13 und ein zweiter Messpunkt an der Druckkammer 14 an. Abhängig vom Messsignal des Durchflusssensors 24 ist mithilfe des Motors 20 die Kurvenscheibe 21 derart drehbar, dass der Durchfluss durch den Durchflusssensor 24 in etwa Null beträgt. Hiermit kann dann eine genaue 1:1-Regelung für das Verhältnis aus Verbrennungsluftstrom und Gasluftstrom etabliert werden.

Die Druckkammer 13 des Servodruckreglers 10 ist über eine Öffnung bzw. Düse 27 mit der mit der Umgebung oder einem Referenzdruck verbunden ist, wobei die Ventilstange 22 in der Öffnung bzw. Düse 27 geführt ist.

Fig. 2 zeigt ein Ausführungsbeispiel eines erfindungsgemäßen Servodruckreglers 25, der Fig. 1 derart weiterbildet, dass der Ventilstange 22 ein Absperrelement 26 zugeordnet ist, welches mit der Düse 27 zusammenwirkt, über welche die Druckkammer 13 des Servodruckreglers 25 mit der Umgebung oder einem Referenzdruck verbunden ist. Durch das Öffnen und Schließen der Düse 27 mithilfe des Absperrelements ist eine Nullkalibrierung des Servodruckreglers 25 möglich, und zwar in Verbindung mit dem Durchflusssensor 24.

Dann, wenn der Servodruckregler 25 der Fig. 2 zwischen zwei nicht gezeigte Gasventile eines Gasregelgeräts bzw. Gasbrenners geschaltet ist, kann mit demselben ein Ventil-Prüf-System (VPS bzw. Valve Proving System) etabliert werden. Hierbei kann über einen gemessenen Durchflusses durch den Durchflusssensor 24 detektiert werden, ob die nicht gezeigten Gasventile des Gasregelgeräts bzw. Gasbrenners dicht sind.

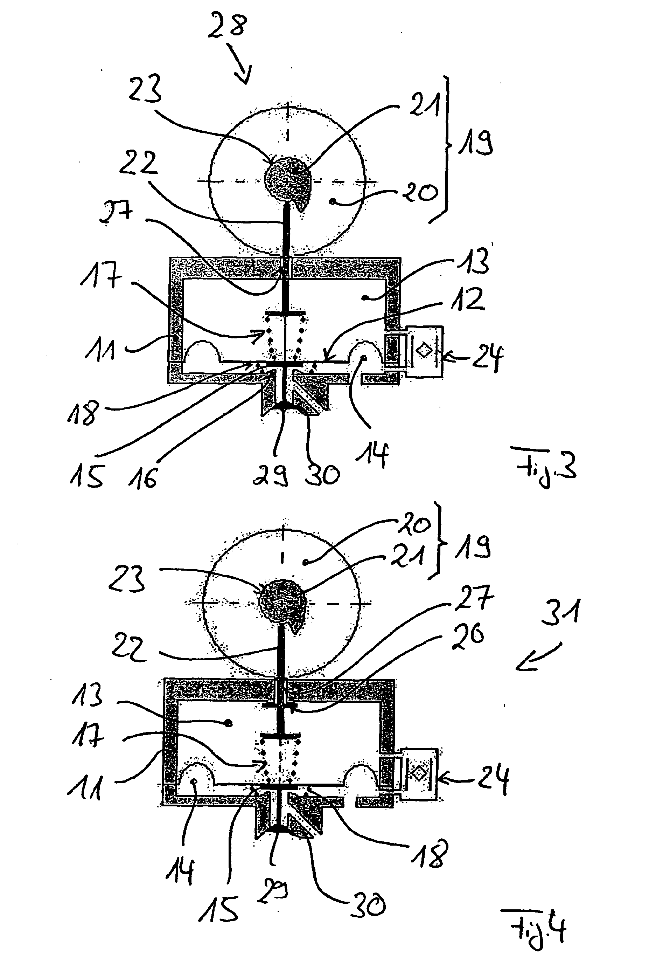

Der Servodruckregler 28 der Fig. 3 ist gegenüber Fig. 1 dadurch weitergebildet ist, dass der Ventilkörper 15 des Servoventils mit einem Ventilkörper 29 eines Einschaltventils verbunden ist, der mit einem entsprechenden Ventilsitz 30 zusammenwirkt.

Durch die Integration eines solchen Einschaltventils in den Servodruckregler 28 können die Kosten von Gasregelgeräten reduziert werden. Weiterhin kann der Bauraum von Gasregelgeräten reduziert werden.

Fig. 4 zeigt ein Ausführungsbeispiel eines erfindungsgemäßen Servodruckreglers 31 der die Merkmale der Fig. 2 und 3 kombiniert, der also sowohl ein integriertes Einschaltventil gemäß Fig. 3 als auch ein Absperrelement 26 gemäß Fig. 2 umfasst.

Die Servodruckregler 10, 25, 28 und 31 der Fig. 1 bis 4 finden vorzugsweise in sogenannten Vormischgasbrennem Verwendung, in welchen dem Gasbrenner ein definiertes Gemisch aus Gas- und Verbrennungsluft zugeführt wird, und zwar ohne dass im Gasbrenner sekundäre Verbrennungsluft für den Verbrennungsvorgang verwendet wird.

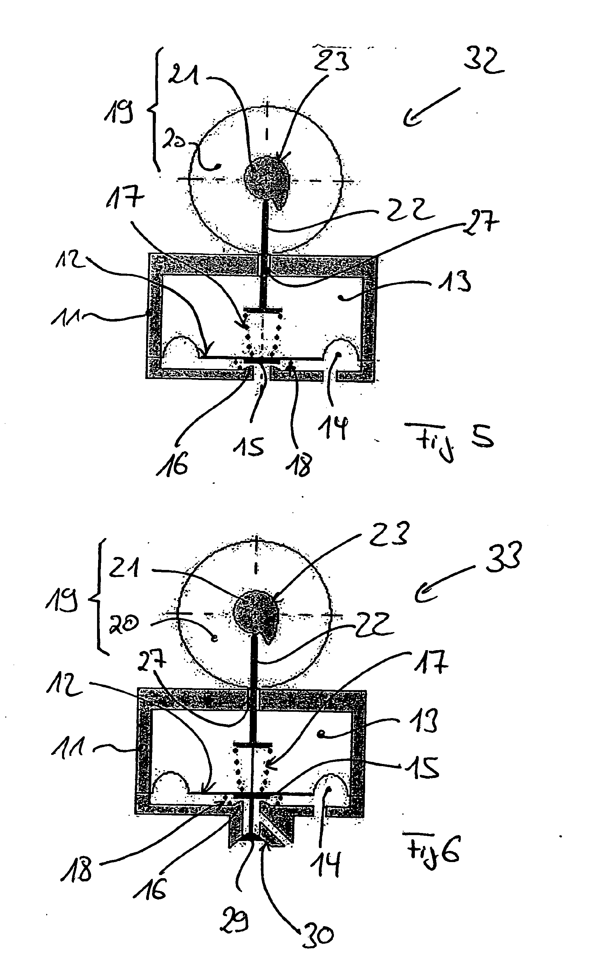

Demgegenüber zeigen Fig. 5 und 6 Servodruckreglern 32 und 33, die in sogenannten atmosphärischen Gasbrennern Verwendung finden, in welchen der Verbrennungsvorgang unter Verwendung sekundärer Verbrennungsluft erfolgt. So entspricht Fig. 5 der Fig. 1 und Fig. 6 der Fig. 3, und zwar jeweils ohne Durchflusssensor 24. Es sei darauf hingewiesen, dass die Servodruckregler der Fig. 5 und 6 auch bei Vormischgasbrennern zum Einsatz kommen können, wobei dann Durchflusssensoren an einer anderen Position angeordnet sind, z. B. im Bereich einer Venturidüse des Gasbrenners.

In Fig. 3, 4 und 6 ist dem Aktuator 19 vorzugsweise jeweils eine nicht gezeigte Rückstellfeder zugeordnet, die dann, wenn der Motor 20 ausgeschaltet ist, die Kurvenscheibe 21 in eine Ausgangsposition rückstellt und so den Ventilkörper 29 gegen den Ventilsitz 30 drückt, um das Einschaltventil zu schließen. In Fig. 4 verschließt dann auch das Absperrelement 26 die Düse 27.

In dem Fall, in welchem dem Aktuator 19 eine nicht gezeigte Rückstellfeder zugeordnet ist, muss dann der jeweilige Motor 20 eingeschaltet bzw. elektrisch bestromt sein, um die Kurvenscheibe 21 in einer von der Ausgangsposition abweichenden Position zu halten.

### Bezugszeichenliste

- 10: Servodruckregler
- 11: Gehäuse
- 12: Regelmembran
- 13: Druckkammer
- 14: Druckkammer
- 15: Ventilkörper
- 16: Ventilsitz
- 17: Federelement
- 18: Federelement
- 19: Aktuator
- 20: Motor
- 21: Kurvenscheibe
- 22: Ventilstange
- 23: Kontur
- 24: Druckflusssensor
- 25: Servodruckregler
- 26: Absperrelement
- 27: Düse
- 28: Servodruckregler
- 29: Ventilkörper
- 30: Ventilsitz
- 31: Servodruckregler
- 32: Servodruckregler
- 33: Servodruckregler

## Patentansprüche

1. Servodruckregler eines Gasregelgeräts, mit einer Regelmembran (12), mit mindestens einem auf die Regelmembran (12) einwirkenden Federelement (17, 18), mit einem der Regelmembran (12) zugeordneten Ventilkörper (15) eines Servoventils, der mit einem Ventilsitz (16) des Servoventils zusammenwirkt, und mit einem Aktuator, der auf die Regelmembran (12) einwirkt, wobei der Aktuator eine von einem Motor (20) drehend antreibbare Kurvenscheibe (21) umfasst, **dadurch gekennzeichnet, dass** durch die Regelmembran (12) voneinander getrennte Druckkammern (13, 14) des Servodruckreglers über einen Durchflusssensor (24) verbunden sind, und dass einer Ventilstange (22), die über ein erstes Federelement (17) auf die Regelmembran (12) einwirkt, ein Absperrelement (26) einer Düse (27) zugeordnet ist, über die eine Druckkammer (13) des Servodruckreglers mit der Umgebung verbindbar ist, um durch Öffnen und Schließen der Düse (27) in Verbindung mit dem Durchflusssensor (24) eine Nullkalibrierung des Servodruckreglers zu ermöglichen.

2. Servodruckregler nach Anspruch 1, **dadurch gekennzeichnet, dass** die Federkraft des ersten Federelement (17), das von einer ersten Seite auf die Regelmembran (12) einwirkt, den Ventilkörper (15) des Servoventils gegen den Ventilsitz (16) des Servoventils drückt.

3. Servodruckregler nach Anspruch 2, **dadurch gekennzeichnet, dass** von einer zweiten Seite auf die Regelmembran (12) ein zweites Federelement (18) einwirkt, dessen Federkraft gegen die vom ersten Federelement (17) bereitgestellte Federkraft wirkt.

4. Servodruckregler nach einem der Ansprüche 1 bis 3, **dadurch gekennzeichnet, dass** der Motor (20) als Schrittmotor ausgebildet ist.

5. Servodruckregler nach einem der Ansprüche 1 bis 4, **dadurch gekennzeichnet, dass** die Kurvenscheibe (21) eine Außenkontur (23) mit veränderlichem Durchmesser aufweist, die auf die Ventilstange einwirkt.

6. Servodruckregler nach einem der Ansprüche 1 bis 5, **dadurch gekennzeichnet, dass** der Motor (20) abhängig vom Messsignal des Durchflusssensors (24) die Kurvenscheibe (21) derart verdreht, dass ein Durchfluss durch den Durchflusssensor (24) in etwa Null beträgt.

7. Servodruckregler nach einem der Ansprüche 1 bis 6, **dadurch gekennzeichnet, dass** mit dem Ventilkörper (15) des Servoventils ein Ventilkörper (29) eines Einschaltventils verbunden ist, der mit einem Ventilsitz (30) des Einschaltventils zusammenwirkt.

8. Gasregelgerät mit einem Servodruckregler nach einem oder mehreren der Ansprüche 1 bis 7.

## Claims

1. Servo pressure regulator of a gas-regulating device, with a regulating diaphragm (12), with at least one spring element (17, 18) acting upon the regulating diaphragm (12), with a valve body (15) of a servo valve, which valve body is assigned to the regulating diaphragm (12) and cooperates with a valve seat (16) of the servo valve, and with an actuator which acts upon the regulating diaphragm (12), the actuator comprising a cam disc (21) which can be driven in rotation by a motor (20), **characterized in that** pressure chambers (13, 14) of the servo pressure regulator which are separated from one another by the regulating diaphragm (12) are connected via a throughflow sensor (24), and **in that** a valve rod (22), which acts via a first spring element (17) upon the regulating diaphragm (12), is assigned a shut-off element (26) of a nozzle (27), via which one pressure chamber (13) of the servo pressure regulator can be connected to the surroundings, in order, by the opening and closing of the nozzle (27), in conjunction with the throughflow sensor (24), to allow zero calibration of the servo pressure regulator.

2. Servo pressure regulator according to Claim 1, **characterized in that** the spring force of the first spring element (17), which acts from a first side upon the regulating diaphragm (12), presses the valve body (15) of the servo valve against the valve seat (16) of the servo valve.

3. Servo pressure regulator according to Claim 2, **characterized in that** a second spring element (18) acts from a second side upon the regulating diaphragm (12), the spring force of which second spring element acts counter to the spring force provided by the first spring element (17).

4. Servo pressure regulator according to one of Claims 1 to 3, **characterized in that** the motor (20) is designed as a stepping motor.

5. Servo pressure regulator according to one of Claims 1 to 4, **characterized in that** the cam disc (21) has an outer contour (23) of variable diameter which acts upon the valve rod.

6. Servo pressure regulator according to one of Claims 1 to 5, **characterized in that** the motor (20) rotates the cam disc (21) as a function of the measurement signal from the throughflow sensor (24), in such a way that a throughflow through the throughflow sensor (24) amounts to approximately zero.

7. Servo pressure regulator according to one of Claims 1 to 6, **characterized in that** the valve body (15) of the servo valve has connected to it a valve body (29) of a switch-on valve, which valve body cooperates with a valve seat (30) of the switch-on valve.

8. Gas-regulating device having a servo pressure regulator according to one or more of Claims 1 to 7.

## Revendications

1. Servorégulateur de pression d'un appareil de régulation de gaz, comprenant une membrane de régulation (12), au moins un élément de ressort (17, 18) agissant sur la membrane de régulation (12), un corps de soupape (15) d'une soupape asservie associé à la membrane de régulation (12), qui coopère avec un siège de soupape (16) de la soupape asservie, et un actionneur qui agit sur la membrane de régulation (12), l'actionneur comprenant un disque de came (21) pouvant être entraîné en rotation par un moteur (20), **caractérisé en ce que** des chambres de pression (13, 14) du servorégulateur de pression, séparées l'une de l'autre par la membrane de régulation (12), sont connectées par le biais d'un capteur de débit (24), et **en ce qu'**une tige de soupape (22), qui agit par le biais d'un premier élément de ressort (17) sur la membrane de régulation (12), est associée à un élément de blocage (26) d'une buse (27), par le biais de laquelle une chambre de pression (13) du servorégulateur de pression peut être raccordée à l'environnement, afin de permettre, par l'ouverture et la fermeture de la buse (27) en association avec le capteur de débit (24), un calibrage à zéro du servorégulateur de pression.

2. Servorégulateur de pression selon la revendication 1, **caractérisé en ce que** la force de ressort du premier élément de ressort (17), qui agit depuis un premier côté sur la membrane de régulation (12), presse le corps de soupape (15) de la soupape asservie contre le siège de soupape (16) de la soupape asservie.

3. Servorégulateur de pression selon la revendication 2, **caractérisé en ce qu'**un deuxième élément de ressort (18) agit depuis un deuxième côté sur la membrane de régulation (12), dont la force de ressort agit à l'encontre de la force de ressort fournie par le premier élément de ressort (17).

4. Servorégulateur de pression selon l'une quelconque des revendications 1 à 3, **caractérisé en ce que** le moteur (20) est réalisé sous forme de moteur pas-à-pas.

5. Servorégulateur de pression selon l'une quelconque des revendications 1 à 4, **caractérisé en ce que** le disque de came (21) présente un contour extérieur (23) avec un diamètre variable, qui agit sur la tige de soupape.

6. Servorégulateur de pression selon l'une quelconque des revendications 1 à 5, **caractérisé en ce que** le moteur (20) fait tourner le disque de came (21) en fonction du signal de mesure du capteur de débit (24) de telle sorte qu'un débit traversant le capteur de débit (24) soit approximativement nul.

7. Servorégulateur de pression selon l'une quelconque des revendications 1 à 6, **caractérisé en ce qu'**un corps de soupape (29) d'une soupape de mise en circuit est connecté au corps de soupape (15) de la soupape asservie, lequel corps de soupape (29) coopère avec un siège de soupape (30) de la soupape de mise en circuit.

8. Appareil de régulation de gaz comprenant un servorégulateur de pression selon l'une quelconque ou plusieurs des revendications 1 à 7.
